(19) Europäisches Patentamt
European Patent Office
Office européen des brevets

(11) Publication number: **0 005 054**
**A2**

# (12) EUROPEAN PATENT APPLICATION

(21) Application number: 79300644.6

(22) Date of filing: 19.04.79

(51) Int. Cl.²: C 01 G 49/06
C 09 C 1/24, C 08 K 7/08

(30) Priority: 21.04.78 GB 1584578

(43) Date of publication of application:
31.10.79 Bulletin 79/22

(84) Designated Contracting States:
BE CH DE FR GB IT LU NL SE

(71) Applicant: MINERAL PROCESS LICENSING CORPORATION BV
62, Lange Voorhout
NL-2514 EH The Hague(NL)

(72) Inventor: Shackleton, Charles Edward Ernest
47A Lower Belgrave Street
London S.W.L.(GB)

(72) Inventor: Turner, John Harry Wallice
Cornerstones Cockyard
Chapel-en-le-Frith v. Stockport Cheshire(GB)

(74) Representative: Kyle, Diane et al,
ELKINGTON AND FIFE High Holborn House 52/54 High Holborn
London WCIV 6SH(GB)

## (54) Process for the preparation of iron oxide and compositions containing iron oxide.

(57) The invention relates to a process for the preparation of micaceous iron oxide which comprises reacting ferrous chloride substantially free from disruptive impurities, with oxygen at a temperature of 300 to 1200°C. The process can conveniently be carried out in a fluidised bed and it can form part of a process for the recovery of chlorine values from iron chloride. The invention also relates to novel applications of micaceous iron oxide particularly in moulded brake pads and clutch linings and in water-based paints.

EP 0 005 054 A2

Croydon Printing Company Ltd.

TITLE MODIFIED
see front page

Title

Iron Oxide

----------

This invention relates to a method for the production of an iron oxide and to the uses thereof. More particularly, this invention relates to a method for the production of micaceous iron oxide.

Micaceous iron oxide is known as a naturally occurring ore which is a steel grey laminar powder, also known as flake haematite. The flaky structure of the iron oxide is its distinguishing feature since chemically it is substantially ferric oxide. The individual particles of micaceous iron oxide resemble thin plates and have an approximate size range of 5 to 100 microns.

Micaceous iron oxide is believed to have been formed some 280 million years ago (Carboniferrous period) when the iron oxide ore was subjected to an enormous crushing effect created by the faulting of the Earth.

Micaceous iron oxide is used as a pigment in Europe and elsewhere for the formulation of metal protective paints. This use is based primarily on the

laminar nature of the oxide pigment. The flakes of this grey pigment reflect solar radiation to a high degree, and a paint film containing this oxide maintains its reflectant ability for many years by shielding the binder from destructive sunlight. Further, the platelike or leafy structure of the micaceous iron oxide provides a physical barrier to the penetration of moisture and reduces the chance of corrosion.

Micaceous iron oxide has been mined successfully in Spain, England and Austria. However, the deposits in Spain and England have now been depleted, and the dominant world source is now in Austria, although the quality of the Austrian material is less satisfactory in some aspects than the English or particularly the Spanish oxides. Micaceous iron oxide has in recent years been subject to a considerable price escalation. Thus the paint industry has been faced with reducing quality, increasing prices coupled with some uncertainty of supply.

Various methods have been described in the literature for the manufacture of synthetic micaceous iron oxide. For example, U.S. Patent No. 3,864,463 describes the production of $\alpha$-$Fe_2O_3$ in platelet form having a particle diameter of 2 to 100 microns by reaction of ferric chloride in the vapour phase with an oxygen-containing gas at a temperature of 400-750°C wherein the reaction is performed in a static bed of generally spheroidal particles and in the presence of a specified amount of an alkali metal halide.

U.S. Patent No. 3,987,156 describes a process for the production of micaceous iron oxide by subjecting an aqueous paste, obtained by mixing an aqueous ferric sulphate solution with an aqueous sodium hydroxide solution, to a hydrothermal treatment whereby micaceous

iron oxide is formed in the shape of hexagonal lamellate crystals in conjunction with sodium sulphate. Similar types of processes involving carrying out reactions in aqueous media have also been described in Japanese Patent Publications 75 35096, 74 44878 and 75 90599.

However, none of the processes described in the literature has led to a commercially viable process in that the known processes require a complicated series of reaction steps or the use of very specific operating conditions, generally in aqueous media.

We have now found that a material having properties which correspond to the properties of naturally occurring micaceous iron oxide can be produced competitively by a simple synthetic process.

The synthetic micaceous iron oxide can be produced by reacting ferrous chloride with oxygen or a molecular oxygen-containing gas at a temperature in the range of about 300°C to 1200°C to form product comprising ferric chloride vapour and a solid micaceous iron oxide, the ferrous chloride being substantially free from impurities that disrupt the crystalline formation of micaceous iron oxide and wherein a portion of the reacted ferrous chloride is converted to micaceous iron oxide and recovering the resulting solid micaceous iron oxide.

A preferred reaction may be summarised as follows in equation (1):-

$$6\ FeCl_2 + 1\tfrac{1}{2}\ O_2 \longrightarrow Fe_2O_3 + 2\ Fe_2Cl_6 \quad \text{........(1)}$$

In the reaction summarised in equation (1), it is necessary to use the stoichiometric quantity of oxygen or molecular oxygen-containing gas in order to obtain substantially micaceous iron oxide and ferric chloride vapour as products.

Synthetic micaceous iron oxide may also be produced

by reacting ferrous chloride with more oxygen than is the case in equation (1) such that some chlorine is produced along with ferric chloride, as in equation (2):-

$$6\ FeCl_2 + 2\tfrac{1}{4}\ O_2 \longrightarrow 1\tfrac{1}{2}\ Fe_2O_3 + 1\tfrac{1}{2}\ Fe_2Cl_6 + 1\tfrac{1}{2}\ Cl_2 \quad \text{..........(2)}$$

However it has been observed that the quality of the micaceous iron oxide produced when additional oxygen is used as in equation (2) is normally less satisfactory than is the case with the iron oxide product of equation (1). Furthermore, the reaction summarised in equation (2) is more difficult in engineering and control than the reaction summarised in equation (1).

The synthetic micaceous iron oxide produced, for example, as per equation (1) resembles the naturally occurring material and, therefore, the present invention provides a solution to the problems of limited supply and inadequate quality of the naturally occuring material. Moreover, the simple process step required by the process according to the invention provides an economical and readily performable commercially viable process for the production of micaceous iron oxide as compared with prior processes described in the literature.

The ferrous chloride feed material for the processes according to the present invention may be obtained from any convenient source provided that it is substantially free from impurities that disrupt the crystalline formation of micaceous iron oxide. Preferably, the ferrous chloride is substantially anhydrous. If the ferrous chloride material is not fully anhydrous, hydrogen chloride is evolved during the reaction and the quality of the micaceous iron

oxide product is reduced.

The ferrous chloride must be free of contaminants that disrupt the crystalline formation of micaceous iron oxide. For example, the ferrous chloride should be substantially free from carbon. If carbon is present in the starting material, there is a danger, which increases with temperature and other kinetic promoters, that carbon monoxide evolved from the carbon during the oxidation of ferrous chloride will interfere with the production of micaceous iron oxide. Similarly, if the ferrous chloride starting material is contaminated with other metal ions these may also interfere with the growth of the micaceous iron oxide crystals.

It is known to react ferrous chloride with oxygen to produce ferric chloride and iron oxide. However it is not known that the reaction can be used to produce micaceous iron oxide.

For example, Frence Patent Publication No. 2,344,496 describes a multi-stage process for the production of chlorine and iron oxide, the first stage of which involves reacting ferrous chloride with oxygen at a temperature of from 500-800°C to yield iron oxide and ferric chloride. However, the ferrous chloride used as starting material is contaminated by impurities of the type obtained in the chlorination of a titaniferous raw material such as ilmenite. These contaminants are, for example, other chlorides, carbon and the raw material e.g. ilmenite. It is believed that these impurities prevent the formation of the micaceous iron oxide crystals. To verify this contention, we have repeated the working example of French Patent No. 2,344,496 and we can confirm that micaceous iron oxide is not obtained.

The French Patent No. 2,344,496 makes no mention

of micaceous iron oxide as would be expected since, not only is micaceous iron oxide not produced by the process described in the French Patent, but also all previous attempts to produce synthetic micaceous iron oxide have centred around very different reactions, as previously described and have not suggested the process according to the present invention.

The synthetic micaceous iron oxide manufacturing process according to the invention can be part of a more extensive process for the recovery of chlorine values from iron chloride, either ferrous or ferric or both, by produced in the chlorination a material containing iron oxide, for example as described in U.S. Patent No. 4,140,746. In this way the ferric chloride produced, for example as in equation (1) can be converted back to ferrous chloride which is substantially free of impurities and which is suitable for the manufacture of more micaceous iron oxide while yielding up a third of its chlorine values.

This embodiment of the invention is particularly advantageous from the commercial aspect since a waste material, requiring expensive disposal procedures, is converted into a valuable commercial product. Thus, according to this embodiment the present invention provides two additional advantages. First, the cost of disposing of a waste product is removed and, second, a process primarily directed to the recovery of chlorine or a chloride compound is transposed to a process which in addition results in the production of micaceous iron oxide. Thus, the recovery process is rendered even more viable in commercial terms.

For example, U.S. Patent No. 4,140,746 described a process for the recovery of chlorine values from iron chloride derived from the chlorination of a titaniferous material e.g. ilmenite wherein ferric chloride is

partially dechlorinated and ferrous chloride is oxidised, the resulting ferric chloride being recycled. The oxidation step of this recovery process can be performed according to the conditions of the present invention thereby producing micaceous iron oxide as a by-product of the recovery process.

Another possibility is that the synthetic micaceous iron oxide manufacturing process according to the invention forms one step of a two-step process directed towards the production of micaceous iron oxide. The additional step, the first step of the process comprises chlorinating an iron oxide-containing material, preferably of high purity, in the presence of sulphur thereby producing ferrous chloride substantially free of impurities and suitable for the production of micaceous iron oxide. The chlorination reaction is preferably carried out in a gas-fluidised bed of solids containing predominantly ferrous chloride. The reaction temperature is controlled preferably below the melting point of ferrous chloride and above 200°C, and most preferably between 350°C and 450°C. The chlorine is conveniently introduced to the reactor as ferric chloride recycled from the second step, that is the oxidation of ferrous chloride to produce micaceous iron oxide, although some make-up chlorine will be required. The ferric chloride is preferably introduced as a gas without prior condensation and the sulphur may be introduced either as a gas or as a liquid. In the case where sulphur is introduced as a liquid, the make-up chlorine may be conveniently added to the sulphur to improve its ease of handling. One advantage of introducing the sulphur as a liquid, which is immediately gasified on contact with the bed, is that it provides a means of moderating the exothermic heat involved in the sulpho-chlorination reaction. Alternatively, the

bed may be cooled, for example, using cooling coils in the bed which have the advantage of not adversely affecting stability of the bed.

Thus, in this embodiment the main inputs to the first step of the two-step process are iron oxide, ferric chloride and sulphur and the main outputs are ferrous chloride and sulphur dioxide. In order fully to achieve this result it is necessary to control the stoichiometry of the overall reaction, as set out in equation (3):-

$$Fe_2O_3 + 1\tfrac{1}{2}S + 2Fe_2Cl_6 \longrightarrow 6FeCl_2 + 1\tfrac{1}{2}SO_2 \quad .......(3)$$

The ferrous chloride substantially free from impurities which disrupt the formation of the micaceous crystals is then processed, in a second step according to the invention to produce micaceous iron oxide and ferric chloride which can be recycled to the reaction according to the equation (3).

According to one embodiment of the process according to this invention, ferrous chloride substantially free from impurities is fed continuously in powder form into a bed of (product) micaceous iron oxide which is fluidised with oxygen and controlled at a temperature between 300°C and 700°C more preferably between 500°C and 650°C. Approximately atmospheric pressure is employed. The feed ratio of oxygen to ferrous chloride is as given in equation (1). In order to minimise the escape of any oxygen from the reaction bed, it is desirable to maintain a small quantity e.g. 0.25% to 2.5% by weight of ferrous chloride in the bed of predominantly (micaceous) ferric oxide. In this way, the troublesome vapour phase reaction between ferric chloride and oxygen which can cause ferric oxide accretions on the reactor walls above the bed and in the exit lines can be largely avoided.

The ferrous chloride feed material may be introduced

to the fluidised bed reactor at or close to the desired operating temperature. Alternatively, heat is required in order to perform the reaction. Means, such as electrical heating of the reactor, may be employed or, more economically, heat may be provided by introducing a small quantity of material which reacts with oxygen to evolve process heat without impairing the crystal structure of the micaceous iron oxide under the reaction temperature employed. Such an example is carbon monoxide at a temperature of 600°C.

Gaseous ferric chloride is continuously removed from the reactor, and after cycloning out entrained particles of micaceous iron oxide is preferably reduced back to ferrous chloride, for instance as disclosed in U.S. Patent No. 4,140,746 for recycle to further synthetic iron oxide manufacture. Alternatively, the ferric chloride may be recycled to an oxide sulphochlorination reaction as discussed earlier.

The solid bed overflow is continuously removed from the fluid bed reactor. The bed overflow consists mainly of synthetic micaceous iron oxide, contaminated by small quantities of ferrous chloride and possibly minor amounts of other materials. The product may therefore be subjected to a water elutriation and/or flotation treatment in conventional manner to separate the iron oxide from both its coarser and finer contaminants. This treatment will also have the effect of deflocculating the iron oxide and removing the water soluble chloride, e.g. the residual ferrous chloride.

The fluidised bed overflow containing residual ferrous chloride may also be purged with oxygen or an oxygen-containing gas either prior to or as a substitute for the water treatment. This is preferably carried out in the bed overflow by directing a proportion of input oxygen up the bed overflow such that

the evolved ferric chloride together with any unreacted oxygen is routed into the main reaction bed.

Micaceous iron oxide may be further recovered in the form of useful size fractions by subjecting the powder, which may include a range of particle sizes, to air classification in conventional manner. Micaceous iron oxide powder may, either before, after or as a substitute for the air classification, be reduced in particle size by micronising or by other known techniques.

According to a further aspect of the present invention, we have found that micaceous iron oxide, both the synthetic and the naturally occurring material, is adapted for diverse uses, not confined to its known applications as a pigment in metal- or wood-protective paints which are both based primarily on the ability of the pigment to reflect solar radiation to a high degree and, therefore, to protect the solvent-based media.

We have found a number of other applications for micaceous iron oxide, both synthetic and natural, to exploit its unusual physical characteristics. Some of these applications, which are listed at (a) to (f) below, extend beyond the paint industry. Their further development will be particularly favoured by the emergence of additional sources of micaceous iron oxide of good quality, reliable supply and competitive price, for example through the production of synthetic micaceous iron oxide from waste iron chloride as disclosed above.

(a) <u>Moulded Brake Pads and Clutch Linings</u>

We have found that the laminar structure of micaceous iron oxide can be used to advantage in the formulation of phenolic resin bonded mineral-filled compositions which conventionally use asbestos as the

main component. Although not in itself a complete replacement for the more fibrous asbestos, micaceous iron oxide-filled friction materials compare favourably with asbestos-filled materials as regards heat removal, and should be as satisfactory in terms of heat resistance. In terms of toxicity, micaceous iron oxide is satisfactory while asbestos is now widely regarded as a health hazard.

The composition given below exemplifies a suitable balance of components. It may be adjusted in a number of ways to meet specific performance requirements.

| | | | | |
|---|---|---|---|---|
| Micaceous Iron Oxide | 100 | part | by | weight |
| Phenol novalacs | 9 | " | " | " |
| Hexamethylenetetraamine | 0.7 | " | " | " |

Part of the micaceous iron oxide may be replaced by fibrous fillers such as glass fibre, slag wool or the mineral wollastonite to modify the mechanical properties of the composition. Other mineral fillers, such as barytes, silica or siliceous fillers like china clay may also be added in limited quantity without causing unacceptable loss of strength or other properties.

The phenol binder resin is preferably a resin which is hard enough to be comminuted to and remain in powder form when stored or used in the ensuing blending process. It is made, preferably, by condensing phenol and formaldehyde in the approximate molar proportions of 1:0.9 using oxalic or other acid catalyst, polycondensing under reflux and then stripping under vacuum and, if desired, by steam distillation to reduce the content of free phenol and low molecular weight condensate. Alternatively, phenol resoles may be used as the binder with or without the incorporation of some phenols derived from cashew nutshell liquid to modify

the frictional characteristics of the compound.

Other resins which may be employed to confer specific properties include mixtures of phenol novalacs and resoles, phenol novalacs condensed with polyisocyanates, polyesters or epoxy resins.

Hexamethylene tetraamine will be required as curing agent for the composition only if the binder resin is a phenol novalac. It is preferably used in comminuted form to facilitate uniform blending with the micaceous iron oxide and powdered novalac components.

Other components which may be added to the blend include lubricants such as stearin or zinc stearate and friction modifiers such as the cross-linked polymers of phenols derived from cashew nutshell liquid.

The preferred process for converting the components of the composition into a friction material for brake shoes, disc pads or clutch linings will depend on the resin used, the equipment available and the practices preferred by the manufacturer. When the resin is a phenol novalac of the preferred type and in powder form, the components may first be blended in a ribbon mixer or barrel tumbler or other suitable equipment to provide an homogeneous mix. Then a so-called "B" stage preform is made by using heat and pressure to mould a sheet of semi-cured composition. From this the requisite shapes are stamped, transferred to restraining moulds and the cure completed in ovens for the appropriate time.

(b) Water-Based Micaceous Iron Oxide Paints

We have found that the high density and laminar character of micaceous iron oxide may be used to great advantage in water-based media such as acrylic emulsions in providing films with a unique combination of water vapour-permeability through the acrylic filled

interstices between the pigment particles and the liquid water shedding nature of the overlapping and impermeable pigment particles. This combination of characteristics makes this paint particularly suitable as a primer for wood. For instance, it allows the paint to be applied to wood in a water-sodden condition. Additionally, the paint film has excellent adhesions to a variety of substrates including wood, flexibility to accommodate the dimensional changes in the substrate, and provides a surface to which subsequent coats of paint, water-or solvent-based, have excellent adhesion. These properties are combined in a paint which, in composition, has high ecological acceptability.

An example of a water based paint containing micaceous iron oxide is given below:-

| | % |
|---|---|
| Natrosol 250 HHR (2% in water) | 7.1 |
| Micaceous Iron Oxide | 50.6 |
| Water | 5.4 |
| Orotan 731 (25%) | 0.4 |
| Synperonic NX | 0.06 |
| Primal AC 634 | 36.3 |
| Ammonia (25%) | 0.12 |

Natrosol HHR is a cellulosic thickenner supplied by the Hercules Powder Co., Orotan 731 (25%) is a dispersant supplied by Rohm and Haas (UK) Ltd. Primal AC 634 is an acrylic polymer emulsion supplied by Rohm and Hass. Synpersonic NX is a non-ionic surfactant supplied by ICI Ltd.

The paint was made by high speed stirring in conventional manner. It was designed to function as a primer for wood and proved very effective in that role. It could also be used as a sealing coat for other cellulosic substrates, for masonry, including asbestos cement board, and for the protection of primed metal surfaces.

On storage, the pigment remained in suspension well and was, in this respect, superior to other paints in which micaceous iron oxide pigments had been dispersed in alkyd media.

The large particle size of the pigment and its protrusion from the binding medium provides a surface to which subsequent coats of paint, whether oil- or water-based, adhere tenaciously.

(c) <u>Thermoplastics</u>

We have found that the high packing density and good thermal conductivity of micaceous iron oxide, as well as the opacity of the pigment to destructive, ultra violet light, can be used to advantage in thermoplastics to increase durability, rigidity and dimensional stability. These advantages are particularly relevant in thermoplastic products which are subjected to fluctuations in temperature and other variable weathering conditions, as for example in building and related applications. Micaceous iron oxide thus provides a unique combination of characteristics, as compared with other fillers, while at the same time substituting for the equivalent volume of the thermoplastic material.

An example of micaceous iron oxide incorporated in a thermoplastic composition composed principally of polyethylene is given below:-

| | |
|---|---|
| Micaceous Iron Oxide | 30 part by weight |
| Thermoplastic Composition | 100 " " " |

The dispersion of the pigment into the thermoplastic proved to be quite easy using conventional extrusion equipment. Slivers of the resulting compound were subjected to microscopic examination which revealed satisfactory pigment dispersion with no tendency to aggregate or flocculate. In addition, the pigment was orientated along the lines of the extrusion

flow.

(d) Polyester laminates and dough mouldings

We have found that micaceous iron oxide can be readily incorporated into polyester resin solutions for use in laminating and dough moulding applications. The high loadings possible with micaceous iron oxide, as compared to alternative fillers, reduce flammability and contribute to the strength and impermeability of the composite. These advantages could prove of particular significance in structural applications.

An example of a dough moulding composition using micaceous iron oxide is given below:-

| | | | | |
|---|---|---|---|---|
| Cellobond Polyester Resin A250 | 26 | parts | by | weight |
| Micaceous Iron Oxide | 90 | " | " | " |
| ½" chopped glass fibre | 12 | " | " | " |
| Tert. Butyl Per Benzoate | 0.5 | " | " | " |
| Oxo Aluminium Stearate Manalox 295 | 0.5 | " | " | " |

The dough moulding composition was prepared by first mixing the tert.-butyl perbenzoate catalyst with polyester resin solution. This was followed by the addition of the micaceous oxide, the chopped glass fibre and, finally, the Manalox 295 which combined the role of lubricant and structure modifier. It was found that the micaceous iron oxide contributed beneficially to the dispersion of the other components and its pronounced laminar character contributed beneficially to its flow properties under moulding conditions.

The dough could be moulded at 500/2000 lb/sq.inch pressure and at temperatures of 130° to 170°C. The resulting mouldings were of high strength and good finish.

Cellobond Resin A250 is a general purpose polyester resin supplied by BP Chemicals International Ltd., and recommended for use in dough moulding compositions.

Manalox 295 is an oxo aluminium stearate composition supplied by Manchem Limited.

(e) <u>Mineral Filled Epoxide Cements</u>

We have found that excellent results have been obtained from the use of micaceous iron oxide as a low oil absorption filler for liquid epoxides. It contributes to improved strength and better heat conductivity. This is of major significance in the formulation of filled epoxide compositions for large shapes such as metal press moulds as compared with other available fillers.

An example is given below for a micaceous iron oxide filled epoxide cement:-

| | | | | |
|---|---|---|---|---|
| A. Epikote 828 | 100 | parts | by | weight |
| Micaceous Iron Oxide | 85 | " | " | " |
| B. Epikure 102 | 30 | " | " | " |
| Epikure 103 | 30 | " | " | " |

Epikote 828 is a liquid epoxide resin supplied by Shell Chemicals Ltd. Epikure 102 and 103 are curing agents for epoxide resins supplied by Shell Chemicals Ltd.

The micaceous iron oxide was dispersed in the Epikote 828 by first heating the resin to about 45°C to reduce its viscosity and then mixing in a heavy duty mixer. The cold mix was stiff but could be spread easily with a warmed knife or by heating the mix to about 20°C. To cure the filled epoxide the mixed curing agents B were blended with the filled epoxide to give a smooth, uniform mix which was substantially free from entrained air bubbles. The cement tooled easily and gelled after three hours. It could be machined after 24 hours at ambient temperature or in a shorter time if the cure was accelerated by the application of heat.

The micaceous filler assisted the application of

the cement and increased its strength. It was helped to reduce the build up of adiabatic heat by increasing its thermal conductivity and heat loss.

(f) Roofing Applications

We have found that the use of micaceous iron oxide in roofing applications, particularly the pigmentation of bitumen, increases water impermeability, reduces ultra violet light penetration, increases heat and light reflection, and contributes noticibly to the mechanical properties of the compound by increasing its hardness and its dimensional stability. In as much as fillers are used with bitumen in roofing applications, they do not add this range of proportions to the end product.

An example of micaceous iron oxide in a composition with bitumen is given below:-

| | |
|---|---|
| Micaceous Iron Oxide | 100 parts by weight |
| Asphaltic bitumen or pitch 80-120 | " " " |

Micaceous iron oxide disperses readily when stirred into molten bitumen, pitch and similar products of natural origin or obtained as distillation residues. The compound may be applied as a hot melt direct to flat roofs or other appropriate surfaces or it can be used indirectly as a factory applied coating to a felt or other substrate.

If desired, micaceous iron oxide may be used with other pigments and fillers such as sand and stone chippings, to modify the properties of the composition for paving and flooring applications.

The following Examples further illustrate the production and properties of synthetic micaceous iron oxide. Substantially pure anhydrous ferrous chloride was used as the feed material (containing about 25 ppm by weight Na).

EXAMPLE 1

Six samples of synthetic micaceous iron oxide were prepared, using a 36 mm internal diameter reactor. The runs were carried out on a batch basis, using an unstirred packed bed. Pressure in the reactor was approximately atmospheric. In each case a charge of 50 grams of ferrous chloride substantially free from impurities that disrupt the crystalline formation of micaceous iron oxide, was placed in the reactor and was preheated to the required temperature by external heaters. Nitrogen was flushed through the material and the reactor system during the heat up. Oxygen was then substituted for nitrogen, and ferric chloride and ferric oxide were produced in approximately the proportions indicated by equation (1). Two oxygen flow rates and three temperatures were used in the course of six separate experiments. Reaction conditions and some of the physical properties of the resulting iron oxide are summarised in the table below. For comparison, the properties of a pigment grade of refined natural micaceous iron oxide of Austrian origin are also included.

| Sample No. | Temp °C | Oxygen mls/min | Colour Grey/red 10 → 0 | Particle Size μ |
|---|---|---|---|---|
| 1 | 500 | 50 | 5 | 5-100 (10-50) |
| 2 | 550 | 50 | 6 | 5-75 (10-40) |
| 3 | 600 | 50 | 7 | 10-150 (15-75) |
| 4 | 500 | 100 | 5 | 5-75 (10-50) |
| 5 | 550 | 100 | 6 | 10-100 (15-75) |
| 6 | 600 | 100 | 6 | 5-100 (15-75) |
| MIOX A/S* | --- | --- | 9 | 5-100 (15-75) |

| Sample No. | Bulk Density | Oil Absorption |
|---|---|---|
| 1 | 0.42 | 18 |
| 2 | 0.48 | 18 |
| 3 | 0.77 | 14 |
| 4 | 0.42 | 17 |
| 5 | 0.45 | 17 |
| 6 | 0.70 | 16 |
| MIOX A/S* | 1.82 | 11 |

*MIOX A/S (Trade name of Karntner Montanindustrie Gesellschaft of Austria) = micaceous iron oxide (Austrian ore sample).

A further description of the synthetic micaceous iron oxide samples manufactured as described above is set out at (a)-(e) below:-

(a) Colour: All the samples had the glittering steel grey appearance characteristic of the refined naturally occurring mineral represented by the sample of commercially established micaceous iron oxide (MIOX A/S). The synthetic micaceous iron oxide (Samples 1 to 6) were all redder in tone than the thicker and more opaque A/S. Alternatively, or additionally, the colour of the synthetic products could be affected by the higher proportion of fine red particles they appeared to contain. There was confirmation of the contribution of the finer particles to the colour when water elutriation was used to diminish the content of

fines. The residual product was considerably less red.

(b) Particle Size: The distribution of particles and their size was estimated by microscopic examination. In the Table the range of particle size is shown first and then, in parenthesis, an estimate is made of the distribution after removing the finest and coarsest 5% of particles by elutriation, flotation of sieving. Although Sample 3 would appear to be very similar in particle size to MIOX A/S it feels less abrasive and more 'unctuous'. This difference is thought to be due, mainly, to the higher proportion of thin flakes present in the synthetic product. Additional factors which may be no less relevant are the presence of a good deal of 'sandy' silica in the natural product (up to 8%) and of occluded air in the synthetic samples.

There is some variation in particle size with reaction temperature and, to a lesser extent, with oxygen flow rate. The main difference appears to be an increase in the proportion of red fines at the lower temperature and at the higher rate of oxygen flow. It is considered that in this series the reaction temperature of 600°C and oxygen flow rate of 50 mls/minute (Sample 3) has provided the best conditions for producing a pigment grade of synthetic micaceous iron oxide in this series of tests.

(c) Bulk Density: The six samples of synthetic micaceous iron oxide are much more flocculated than the natural product. This is confirmed by the bulk density determinations which indicate a gradient of bulk density increasing with the reaction temperature but still well below the natural product. The effect of oxygen flow rate is small but does indicate that higher bulk densities are obtained when the oxygen flow rate is decreased.

The bulk density of all six samples was increased

by mechanical compression to express entrained air from the flocculated oxide. Alternatively, the samples could be densified by placing 'in vacuo' for a short time.

The flocculated condition was also destroyed by dispersing the samples in water and then using heat to evaporate the water from the sedimented cake. As a water elutriation process appears to be the most appropriate way of separating unwanted extraneous matter from the pigment grade synthetic micaceous iron oxide it is expected that the bulk density of the industrial products treated in this way will approach more closely to the natural MIXO A/S.

(d) <u>pH and Chloride Content</u>: It is noteworthy that all the samples produced in this series have confirmed previous observations that this route to the production of iron oxide provides a product of negligable chloride content and neutral pH. On the other hand, the natural product MIOX A/S has a slightly acidic reaction due, it is thought, to the presence of ferrous sulphate. This is probably formed during the drying process by the oxidation of iron pyrites or mundic commonly associated with the micaceous ore in mineral deposit. In paints this ferrous sulphate can adversely effect performance by retarding drying and aggravating settling of the pigment by peptising gelatinous aids to pigment suspension.

(e) <u>Oil Absorption</u>: Pigmentary grade micaceous iron oxide of natural origin has, typically, an oil absorption of 9.5 to 12 gms. oil/100 gms. pigment. Samples 1 to 6 range in oil absorption between 14 and 18. This difference is due, most probably, to the higher surface area of the synthetic product resulting both from thinner flakes and smaller particle size.

<u>EXAMPLE 2</u>

The reaction summarised in equation (1) was carried out in a continuously operated fluidised bed reactor. The reactor tube had an internal diameter of 100 mm and a height of 800 mm, and it was set in an electrically heated furnace which was capable of maintaining bed temperature at the required level. In this Example, a bed temperature of 550°C was used. The bed was composed mostly of product iron oxide manufactured in a previous run under similar conditions. The bed height was maintained at 100 mm, using a standpipe overflow. Substantially pure anhydrous ferrous chloride was fed from a storage bin, through a calibrated screw conveyor which delivered 22 grams of feed material per min, to a side arm injector. Nitrogen was used to blow ferrous chloride into the bed, using a flow of 1.4 litres per min through the side arm injector. Oxygen (1 litre per minute) and further nitrogen (6.6 litres per minute) were introduced through a distributer plate at the base of the reactor, via seven 1.5 mm holes covered by bubble caps. After one hours running time, the off gas and bed overflow were sampled. Apart from nitrogen, the off gas consisted almostly entirely of ferric chloride, together with some blow-over solid bed material. The bed overflow analysed at 98.5% $Fe_2O_3$ and 1.5% $FeCl_2$. The $Fe_2O_3$ was mainly micaceous iron oxide with a particle size range of 5-25 microns.

CLAIMS:

1. A process for the production of synthetic micaceous iron oxide which comprises reacting ferrous chloride with oxygen or a molecular oxygen-containing gas at a temperature in the range of about 300°C to 1200°C to form products comprising ferric chloride vapour and solid micaceous iron oxide, the ferrous chloride being substantially free from impurities that disrupt the crystalline formation of micaceous iron oxide and wherein a portion of the reacted ferrous chloride is converted to micaceous iron oxide, and recovering the resulting solid micaceous iron oxide.

2. A process according to Claim 1, wherein the amount of oxygen or molecular oxygen-containing gas is controlled such that the products are substantially ferric chloride vapour and solid micaceous iron oxide.

3. A process according to Claim 1 or 2, wherein the reaction temperature is controlled between 300°C and 700°C.

4. A process according to Claim 3, wherein the reaction temperature is controlled between 500°C and 650°C.

5. A process according to any of Claims 1 to 4, wherein the reaction is effected in a continuously operating fluidised bed reactor in which the bed consists substantially of micaceous iron oxide and in which the fluidising gas is oxygen or a molecular oxygen-containing gas.

6. A process according to any of Claims 1 to 5, wherein the micaceous iron oxide is recovered by water elutriation and/or flotation.

7. A process according to any of Claims 1 to 5, wherein the micaceous iron oxide is recovered by air classification.

8. A process according to any of Claims 1 to 7, wherein the micaceous iron oxide is recovered and reduced in particle size by micronising.

9. A process according to Claim 5, wherein the fluidised bed overflow, consisting mainly of micaceous iron oxide, is recovered by purging out residual ferrous chloride with oxygen or a molecular oxygen-containing gas.

10. A process according to any of Claims 1 to 9, wherein the ferric chloride product is subjected to partial dechlorination and the resulting ferrous chloride is recycled for reaction with oxygen or a molecular oxygen-containing gas to produce micaceous iron oxide, whereby the process for the production of synthetic micaceous iron oxide forms part of a process for the recovery of chlorine or a chloride compound by-produced in the chlorination of a material containing iron oxide.

11. A process according to Claim 10, wherein the material containing iron oxide is a titaniferous material.

12. A process according to any of Claims 1 to 9, wherein the ferrous chloride is obtained by reaction of a material containing iron oxide in solid particulate form in a gas-fluidised bed of solids containing ferrous chloride with sulphur and ferric chloride at a temperature below the melting point of ferrous chloride such that the major reaction products are sulphur dioxide and solid ferrous chloride, wherein the ferrous chloride thus obtained is treated with oxygen or a molecular oxygen-containing gas to form micaceous iron oxide and wherein the ferric chloride by-produced is recycled to the gas-fluidised bed.

13. A process for the production of synthetic micaceous iron oxide substantially as herein described with reference to either of the specific Examples.

14. Synthetic micaceous iron oxide produced by a process according to any of Claims 1 to 13.

15. A moulding composition comprising a phenolic resin and synthetic or naturally occurring micaceous iron oxide.

16. A brake pad or clutch lining moulded from a composition according to Claim 15.

17. A water-based paint comprising a polymer latex or an amine/alcohol solubilised alkyd and a pigment comprising synthetic or naturally occurring micaceous iron oxide.

18. A thermoplastic composition comprising a thermoplastic polymer and a filler comprising synthetic or naturally occurring micaceous iron oxide.

19. A laminating or dough moulding composition comprising a polyester resin and synthetic or naturally occurring micaceous iron oxide.

20. A liquid epoxide comprising synthetic or naturally occurring micaceous iron oxide.

21. A roofing material comprising bitumen and synthetic or naturally occurring micaceous iron oxide.